(19)

**Europäisches Patentamt**
**European Patent Office**
**Office européen des brevets**

(11) **EP 4 075 373 A1**

(12) **EUROPEAN PATENT APPLICATION**
published in accordance with Art. 153(4) EPC

(43) Date of publication:
**19.10.2022  Bulletin 2022/42**

(21) Application number: **20899209.9**

(22) Date of filing: **11.12.2020**

(51) International Patent Classification (IPC):
***G06T 3/40*** (2006.01)

(52) Cooperative Patent Classification (CPC):
**G06T 3/40; G06T 5/50; G06T 7/11**

(86) International application number:
**PCT/CN2020/135536**

(87) International publication number:
**WO 2021/115403 (17.06.2021 Gazette 2021/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.12.2019  CN 201911289271**

(71) Applicant: **Sanechips Technology Co., Ltd.**
**Shenzhen, Guangdong 518055 (CN)**

(72) Inventors:
• **KONG, Dehui**
  **Shenzhen, Guangdong 518057 (CN)**
• **LIU, Hengqi**
  **Shenzhen, Guangdong 518057 (CN)**
• **XU, Ke**
  **Shenzhen, Guangdong 518057 (CN)**

• **LIU, Xin**
  **Shenzhen, Guangdong 518057 (CN)**
• **ZHU, Fang**
  **Shenzhen, Guangdong 518057 (CN)**
• **YOU, Jing**
  **Shenzhen, Guangdong 518057 (CN)**
• **REN, Cong**
  **Shenzhen, Guangdong 518057 (CN)**
• **AI, Jisong**
  **Shenzhen, Guangdong 518057 (CN)**
• **WANG, Ning**
  **Shenzhen, Guangdong 518057 (CN)**
• **WANG, Hong**
  **Shenzhen, Guangdong 518057 (CN)**

(74) Representative: **Deambrogi, Edgardo et al**
**Jacobacci & Partners S.p.A.**
**Corso Emilia 8**
**10152 Torino (IT)**

(54) **IMAGE PROCESSING METHOD AND APPARATUS**

(57)    The present invention provides an image processing method and apparatus. The method includes: segmenting a first image with a resolution being a first resolution according to an image change intensity, so as to obtain a gradient part and a texture part; converting the gradient part into first pixel information with a resolution being a second resolution, and converting the texture part into second pixel information with a resolution being the second resolution; and fusing the first pixel information with the second pixel information to obtain a second image.

Segmenting a first image with a resolution being a first resolution according to an image change intensity, so as to obtain a gradient part and a texture part, wherein the image change intensity of the texture part is greater than that of the gradient part — S202

Converting the gradient part into first pixel information with a resolution being a second resolution, and converting the texture part into second pixel information with a resolution being the second resolution according to second image format description information of the texture part, wherein the second image format description information of the texture part is determined according to a mapping relationship between a first image format and a second image format, and the image format of the first image is the first image format — S204

Fusing the first pixel information with the second pixel information to obtain a second image, wherein the resolution of the second image is the second resolution, and the second resolution is greater than the first resolution — S206

Fig. 2

EP 4 075 373 A1

**Description**

The present invention claims the priority of Chinese Application CN 201911289271.2, filed with the Chinese Patent Office on December13, 2019, and the entire contents of which are herein incorporated by reference.

**Technical Field**

The present invention relates to the field of communications, such as an image processing method and apparatus.

**Background**

The super-resolution reconstruction refers to a processing procedure of converting a low-resolution image into a high-resolution image. At present, the commonly used super resolution reconstruction methods are interpolation methods based on spatial position or edges. The interpolation methods lack local information, and the directional features referenced by the interpolation are usually derived from statistical results, and specific pixel filling processing is implemented by means of statistical information of an area where each pixel is located, such as a gradient, which leads to a decrease in definition or a negative effect of "jaggedness" in an amplification process of the method, such that a clear high-resolution image cannot be obtained.

**Summary**

Embodiments of the present invention provide an image processing method and apparatus, so as to at least avoid the situation of a poor super resolution reconstruction effect in the related art.

In a first aspect, the embodiments of the present invention provide an image processing method, including:

A first image with a resolution being a first resolution is segmented according to an image change intensity, so as to obtain a gradient part and a texture part, wherein the image change intensity of the texture part is greater than that of the gradient part;

The gradient part is converted into first pixel information with a resolution being a second resolution, and converting the texture part into second pixel information with a resolution being the second resolution according to second image format description information of the texture part, wherein the second image format description information of the texture part is determined according to a mapping relationship between a first image format and a second image format, and the image format of the first image is the first image format; and

The first pixel information is fused with the second pixel information to obtain a second image, wherein the resolution of the second image is the second resolution, and the second resolution is greater than the first resolution.

In a second aspect, the embodiments of the present invention provide an image processing apparatus, including:

a segmentation module, configured to segment a first image with a resolution being a first resolution according to an image change intensity, so as to obtain a gradient part and a texture part, wherein the image change intensity of the texture part is greater than that of the gradient part;

a conversion module, configured to convert the gradient part into first pixel information with a resolution being a second resolution, and convert the texture part into second pixel information with a resolution being the second resolution according to second image format description information of the texture part, wherein the second image format description information of the texture part is determined according to a mapping relationship between a first image format and a second image format, and the image format of the first image is the first image format; and

a fusion module, configured to fuse the first pixel information with the second pixel information to obtain a second image, wherein the resolution of the second image is the second resolution, and the second resolution is greater than the first resolution.

In a third aspect, the embodiments of the present invention further provide a computer-readable storage medium, wherein computer programs are stored in the computer-readable storage medium, and the computer program are configured to, when running, execute the image processing method in the first aspect.

In a fourth aspect, the embodiments of the present invention further provide an electronic apparatus, including a memory and a processor, wherein computer programs are stored in the memory, and the processor is configured to run the computer programs to execute the image processing method in the first aspect.

**Brief Description of the Drawings**

Fig. 1 is a block diagram of a hardware structure of a computing apparatus of an image processing method according to an embodiment of the present invention;

Fig. 2 is a flow chart of a method for image processing according to an embodiment of the present invention;

Fig. 3 is a structural block diagram of an apparatus for image processing according to an embodiment of the present invention;

Fig. 4 is a schematic diagram of a construction process of a network training set according to an optional embodiment of the present invention;

Fig. 5 is a schematic flow chart of a method for network training according to an optional embodiment of the present invention; and

Fig. 6 is a schematic diagram of an image processing flow according to an optional embodiment of the present invention.

**Detailed Description of the Embodiments**

The present invention will be described in detail below with reference to the drawings and in conjunction with the embodiments. It should be noted that, the embodiments in the present invention and the features of the embodiments can be combined with each other in the case of no conflict.
It should be noted that, the terms "first", "second" and the like in the description and claims of the present invention and the above drawings are used for distinguishing similar objects, and are not necessarily used for describing a specific order or sequence.

Embodiment one

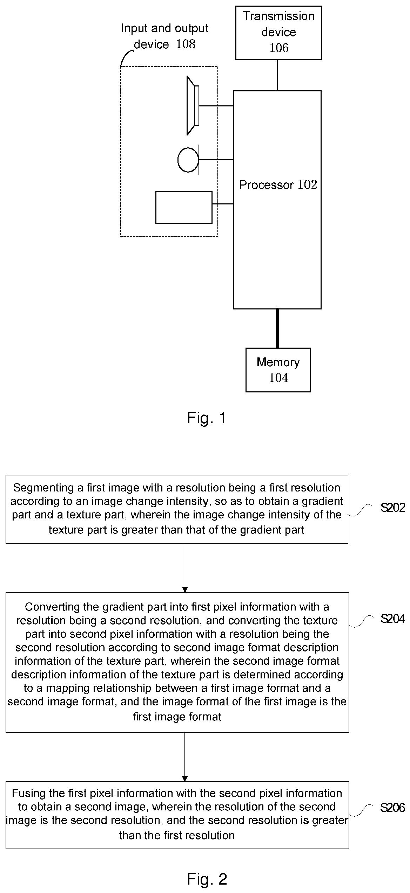

The method embodiment provided by the embodiments of the present invention can be executed in a computing apparatus, a computer terminal, or a similar apparatus. Taking operation on the computing apparatus as an example, Fig. 1 is a block diagram of a hardware structure of a computing apparatus of an image processing method according to an embodiment of the present invention. As shown in Fig. 1, a computing apparatus 10 can include at least a (only one is shown in Fig. 1) processor 102 (the processor 102 can include, but is not limited to, processing apparatuses such as a micro control unit (MCU) or a field programmable gate array (FPGA)), and a memory 104 configured to store data. Optionally, the computing apparatus can further include a transmission device 106 configured for communication and an input and output device 108. Those of ordinary skill in the art can understand that, the structure shown in Fig. 1 is only schematic, and does not limit the structure of the computing apparatus. For example, the computing apparatus 10 can further include more or fewer components than those shown in Fig. 1, or have a different configuration than that shown in Fig. 1.
The memory 104 can be configured to store computer programs, for example, software programs and modules of invention software, such as computer programs corresponding to the image processing method in the embodiment of the present invention. By running the computer programs stored in the memory 104, the processor 102 executes various functional inventions and data processing, that is, implements the above method. The memory 104 can include a high-speed random access memory, and can also include a nonvolatile memory, such as at least one magnetic disk storage apparatus, a flash memory, or other nonvolatile solid-state memories. In some instances, the memory 104 can further include memories that are arranged remotely relative to the processor 102, and these memories can be connected to the computing apparatus 10 by a network. Instances of the network include, but are not limited to, the Internet, an intranet, a local area network, a mobile communication network, and combinations thereof.
The transmission apparatus 106 is configured to receive or transmit data by means of a network. The network can include, for example, a wireless network provided by a communication provider of the computing apparatus 10. In one example, the transmission apparatus 106 includes a network interface controller (NIC), and the NIC can be connected to other network devices by means of a base station, so as to communicate with the Internet. In one example, the transmission apparatus 106 can be a radio frequency (RF) module, and the RF module is configured to communicate with the Internet in a wireless manner.

The present embodiment provides an image processing method running on the computing apparatus. Fig. 2 is a flow diagram of a method for image processing according to an embodiment of the present invention. As shown in Fig. 2, the flow includes steps S202 to S206.

In step S202, a first image with a resolution being a first resolution is segmented according to an image change intensity, so as to obtain a gradient part and a texture part, wherein the image change intensity of the texture part is greater than that of the gradient part.

In step S204, the gradient part is converted into first pixel information with a resolution being a second resolution, and the texture part is converted into second pixel information with a resolution being the second resolution according to second image format description information of the texture part, wherein the second image format description information of the texture part is determined according to a mapping relationship between a first image format and a second image format, and the image format of the first image is the first image format.

In step S206, the first pixel information is fused with the second pixel information to obtain a second image, wherein the resolution of the second image is the second resolution, and the second resolution is greater than the first resolution.

Through the above steps, the image is segmented into the texture part and the gradient part, the texture part and the gradient part of the image are processed respectively, and then the processing results are fused. Therefore, the situation of a poor super resolution reconstruction effect in the related art can be avoided, and the super resolution reconstruction effect is improved.

It should be noted that, optionally, the first image format can be any image format with a lower resolution, and the second image format can be any image format with a relatively higher resolution, for example, the first image format can be is a bitmap, and the second image format can be a vector graph.

In an embodiment, the mapping relationship is a first model, the first model is obtained by training a deep neural network by using multiple groups of data, and each group of data among the multiple groups of data includes: second sample images of a plurality of second image formats, and a first sample image of the first image format corresponding to the second sample image.

In an embodiment, the method further includes: processing the second sample image to obtain an intermediate image, wherein the resolution of the intermediate image is the second resolution, and the image format of the intermediate image is the first image format; and performing down-sampling processing on the intermediate image to obtain the first sample image, wherein the resolution of the first sample image is the first resolution, and the image format of the first sample image is the first image format.

In an embodiment, the step of segmenting the first image with the resolution being the first resolution according to the image change intensity includes: segmenting the first image according to space domain information of the first image, wherein the space domain information indicates the image change intensity; or, segmenting the first image according to frequency domain information of the first image, wherein the frequency domain information indicates the image change intensity.

In an embodiment, the step of segmenting the first image according to the space domain information of the first image includes: respectively extracting a high-frequency component and a low-frequency component of the first image according to the frequency domain information of the first image, wherein the high-frequency component is used as the texture part, and the low-frequency component is used as the gradation part.

In an embodiment, the step of fusing the first pixel information with the second pixel information includes: performing linear superposition on the first pixel information and the second pixel information; or, the step of fusing the first pixel information with the second pixel information includes: fusing the first pixel information with the second pixel information in a transformation domain, so as to obtain third pixel information; and performing inverse transformation on the third pixel information, wherein the inverse transformation is an inverse process of the segmentation.

In an embodiment, the step of performing linear superposition on the first pixel information and the second pixel information includes: performing linear superposition on the first pixel information and the second pixel information with a specified weight, wherein the specified weight is determined according to a first proportion, and the first proportion is a proportion of the texture part in the first image.

In the present embodiment, an image processing apparatus is further provided. The apparatus is configured to implement the above embodiments and preferred embodiments, and what has been described will not be repeated. As used below, the term "module" can be at least one of software and hardware that implement predetermined functions. Although the apparatus described in the following embodiments is preferably implemented in software, implementations in hardware, or a combination of software and hardware, are also possible and conceivable.

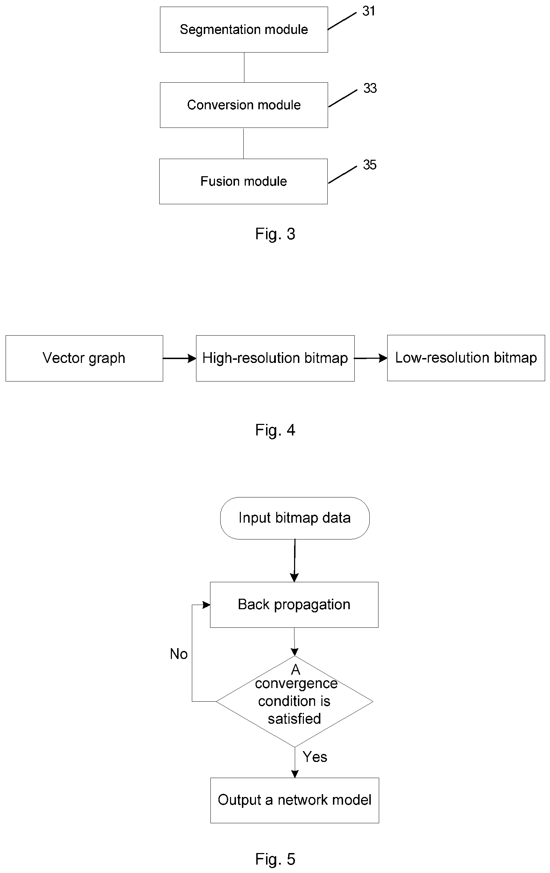

Fig. 3 is a structural block diagram of an apparatus for image processing according to an embodiment of the present invention. As shown in Fig. 3, the apparatus includes:

a segmentation module 31, configured to segment a first image with a resolution being a first resolution according to an image change intensity, so as to obtain a gradient part and a texture part, wherein the image change intensity of the texture part is greater than that of the gradient part;

a conversion module 33, configured to convert the gradient part into first pixel information with a resolution being a second resolution, and convert the texture part into second pixel information with a resolution being the second resolution according to second image format description information of the texture part, wherein the second image format description information of the texture part is determined according to a mapping relationship between a first image format and a second image format, and the image format of the first image is the first image format; and

a fusion module 35, configured to fuse the first pixel information with the second pixel information to obtain a second image, wherein the resolution of the second image is the second resolution, and the second resolution is greater than the first resolution.

By means of the above module, the image is segmented into the texture part and the gradient part, the texture part and the gradient part of the image are processed respectively, and then the processing results are fused. Therefore, the situation of a poor super resolution reconstruction effect in the related art can be avoided, and the super resolution reconstruction effect is improved.

In an embodiment, the mapping relationship is a first model, the first model is obtained by training a deep neural network by using multiple groups of data, and each group of data among the multiple groups of data includes: second sample images of a plurality of second image formats, and a first sample image of the first image format corresponding to the second sample image.

In an embodiment, the apparatus further includes: a processing module, configured to process the second sample image to obtain an intermediate image, wherein the resolution of the intermediate image is the second resolution, and the image format of the intermediate image is the first image format; and a down-sampling module, configured to perform down-sampling processing on the intermediate image to obtain the first sample image, wherein the resolution of the first sample image is the first resolution, and the image format of the first sample image is the first image format.

In an embodiment, the segmentation module 31 includes: a first segmentation sub-module, configured to segment the first image according to space domain information of the first image, wherein the space domain information indicates the image change intensity; or, a second segmentation sub-module, configured to segment the first image according to frequency domain information of the first image, wherein the frequency domain information indicates the image change intensity.

In an embodiment, the second segmentation sub-module includes: a segmentation sub-unit, configured to respectively extract a high-frequency component and a low-frequency component of the first image according to the frequency domain information of the first image, wherein the high-frequency component is used as the texture part, and the low-frequency component is used as the gradation part.

In an embodiment, the fusion module 37 includes: a first fusion sub-module, configured to perform linear superposition on the first pixel information and the second pixel information.

Or, in an embodiment, the fusion module 37 includes: a second fusion sub-module, configured to fuse the first pixel information with the second pixel information in a transformation domain, so as to obtain third pixel information; and an inverse transformation module, configured to perform inverse transformation on the third pixel information, wherein the inverse transformation is an inverse process of the segmentation.

In an embodiment, the first fusion sub-module includes: a superposition module, configured to perform linear superposition on the first pixel information and the second pixel information with a specified weight, wherein the specified weight is determined according to a first proportion, and the first proportion is a proportion of the texture part in the first image.

It should be noted that, each of the above modules can be implemented by at least one of software and hardware. For hardware, it can be implemented in the following manners, but is not limited thereto: the above modules are all located in the same processor; or, a plurality of above modules is located in different processors in any combination.

Implementation Modes:

In the related art, negative effects are introduced into a super resolution amplification method based on bitmap processing, such as jaggedness and blurring, and these situations reduce the image amplification effect and affect the feeling of user perception of the image. In addition, a stripe phenomenon may be caused by forcible expression by using the method in the related art, or the complexity of representing data is greatly increased, such that it is difficult for a vector graph to express a vivid image effect with rich color layers. A traditional vector algorithm includes finding a suitable approximate contour curve and detection corners, in the case of too many detection corners, the smoothness of the image will be reduced, and in the case of too few detection corners, the sharpness of the image will be reduced, such that it is difficult to determine algorithm parameters of the vector graph. Finally, a method based on a neural network in the related art has a fixed magnification, and an expansion ratio usually requires the retraining of the model, which is time-consuming and increases the complexity of model deployment.

Deep learning is a type of machine learning algorithm in the current field of computer vision that processes problems by simulating human brain cognition. A model based on deep learning can have huge data abstraction ability, and nonlinear simulation is introduced by an activation layer to enhance the processing ability of the model. The current super resolution methods based on deep learning are generally end-to-end solutions. Although the complexity of the algorithm is reduced, on one hand, this method is a method for a fixed magnification, so it is usually necessary to retrain the network to acquire model parameters of the corresponding magnification, which is not conducive to model deployment. On the other hand, due to the lack of explicit functional positioning between modules, the model has poor interpretability, which is not conducive to debugging.

The embodiments of the present invention can simulate a process of converting an image from a bitmap to a vector graph by means of a neural network, so as to output an image with a higher definition, thereby having a broad invention prospect.

The embodiments of the present invention can use the model abstraction ability of deep learning to segment an image into a gradient area and a texture area in terms of change intensity; then, use a traditional interpolation method to process the gradient area, and use a vector graphic algorithm to process the texture area; and finally, integrate the processing results to obtain a final output. Therefore, the above situation is effectively avoided.

It should be noted that, a bitmap, also known as a lattice diagram or a grid image, is a description manner in which a real image is segmented into an ordered lattice, and each point in the lattice represents visual information of the position (or a local area). The color and texture of the image are represented by the arrangement of these points, color changes and subtle transitions of colors can be realized by increasing the density of the lattice, so as to generate a vivid display effect. But the structural information of the image is lost, and the information is very important in the super resolution processing of the image. Therefore, a bitmap-based image super resolution usually has the jagged and blurry defects.

It should also be noted that, a vector graph describes the outline of an image through analytic geometry, such as the Bezier curve. These vectors can be a single point or a line segment. Since these vector units have clear mathematical descriptions and are decoupled from pixel density, no distortion is introduced in the super resolution processing, and there is no jaggedness. In the field of processing by using vector graphs, such as logo design and text design, it has obvious advantages. However, the drawback of the current vector graph is that it is very difficult to simulate all information of natural images 100%, especially vivid images with rich color layers.

Exemplarily, an image vectorization super resolution reconstruction method based on deep learning in the embodiments of the present invention includes the following steps:

designing and training of a deep neural network: a training set is mainly designed by using a corresponding relationship between a bitmap and a vector graph in this stage. The construction process of the network training set is shown in Fig. 4, Fig. 4 is a schematic diagram of a construction process of a network training set according to an optional embodiment of the present invention, and as shown in Fig. 4, the vector graph is firstly converted into a high-resolution scalar graph (i.e., a high-resolution bitmap). The vector graph has nothing to do with resolution, the high-resolution bitmap can retain more detailed information, then the high-resolution bitmap is converted into a low-resolution bitmap by down-sampling, and a variety of down-sampling manners can be selected herein, such as Bicubic interpolation down-sampling or Gaussian fuzzy down-sampling. The process is shown in Fig. 4. The network is trained by a back propagation method, and the flow is shown in Fig. 5. Fig. 5 is a schematic flow diagram of a method for network training according to an optional embodiment of the present invention, and as shown in Fig. 5, the method includes: inputting bitmap data; and performing back propagation, when a convergence condition is satisfied, outputting a network model, and when the convergence condition is not satisfied, continuing to perform the back propagation. The network structure can be U-Net, the network is suitable for extracting data features, and has been widely used in tasks such as super resolution and object recognition.

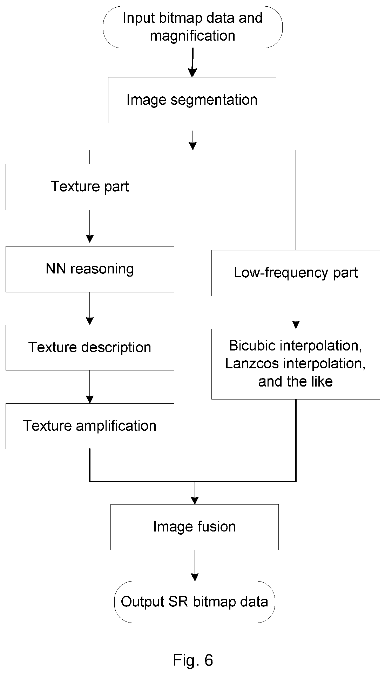

Separation and merging of scalar data: a variety of separation means can be used, including a method based on edge extraction or a method based on frequency domain segmentation, referring to an edge segmentation and image fusion module in Fig. 6. Fig. 6 is a schematic diagram of an image processing flow according to an optional embodiment of the present invention, and as shown in Fig. 6, the image processing flow includes:

inputting bitmap data and a target magnification;

performing image segmentation to segment an image into a texture part and a low-frequency part (which is equivalent to the gradient part in the above embodiment);

then performing neural network (NN) reasoning, texture description and texture amplification on the texture part, so as to obtain a processing result of the texture part; performing interpolation on the low-frequency part, for example, performing interpolation by using the Bicubic interpolation , the Lanzos interpolation and other methods, so as to obtain a processing result of the low-frequency part; and

performing image fusion on the two processing results to output super resolution (SR) bitmap data.

It should be noted that, super resolution is respectively implemented for the texture part and the low-frequency part. Optionally, on one hand, the vector description of the texture part of the input bitmap is obtained by using a method based on a neural network, and the result of the texture part is obtained by using a method based on a vector graph. On the other hand, interpolation can be performed on the low-frequency part by using an amplification method based on isotropy, such as Bicubic and Lanzcos.

The embodiments of the present invention can suppress the jaggedness and blurring effects caused by the isotropic interpolation method, reduce the defect of poor processing of the gradient area by the vector graph, implement an electrodeless amplification method based on the neural network, and convert the bitmap into the vector graph, thereby being free of the jagged and blurring effects during the amplification process.

The solutions of the embodiments of the present invention are explained below in combination with specific scenarios.

Exemplarily, a manually designed logo, a document and a captured natural image are added into a processing object, wherein the natural image also includes a designed building with distinct edges or natural scenery with rich colors. The present embodiment can be implemented according to two modules, and the first module mainly includes an architecture design of a neural network and the implementation of a training end. The focus of this module is to construct a training set, and according to the processing method of Fig. 4, it can implement the construction of a variety of vector graphs and low-resolution bitmap pairs. Optionally, U-net can be used to implement the conversion of this image format, but it should be pointed out that, the network structure is not unique. The second module is configured to implement the super resolution processing of the processing object. The super resolution processing of the processing object includes separation and merging of low-resolution bitmaps and different processing methods for different components. In the present embodiment, jaggedness caused by each isotropic method can be avoided by amplifying the vector graph, and the gradient part is processed by the isotropic method. Optionally, segmentation and merging can be realized by two methods, for example, an edge extraction method based on space domain (e.g., a method based on gradient), or a filtering method based on frequency domain (e.g., high-frequency components of a low-resolution bitmap at each scale are obtained by using a method based on wavelet transformation or micro-genetic algorithm (MGA). Optionally, the two are combined by using a corresponding synthesis method.

The implementation of the technical solutions is described in detail below in conjunction with an implementation flow diagram:

First part: construction of a deep neural network training set.

According to a corresponding relationship between a vector graph and a bitmap, a corresponding network is constructed, wherein the vector graph is $\phi_i \in \Phi$, $\Phi$ represents a two-dimensional real number set, and the corresponding bitmap is:

$$\varphi_i = f\left(\Gamma\left(\phi_i\right)\right) \tag{1}$$

wherein $\Gamma$ represents a mapping process of the vector graph to the bitmap at a high resolution, after bitmap data at the corresponding scale is obtained, $f(\ )$ down-sampling processing is utilized, the down-sampling method here can use Bicubic down-sampling or Gaussian blurring or the like, or use combined down-sampling, and it should be pointed out that, a many-to-one network structure can be used herein, that is, a group of vector graphs can correspond to multiple groups of low-resolution bitmaps. The function of a neural network K is to realize a process of mapping from the low-resolution bitmap to the vector graph, as shown in the following formula (2):

$$K : \varphi_i \rightarrow \phi_i \tag{2}$$

With regard to the training process, reference can be made to general network training methods, such as stochastic gradient descent (SGD), adaptive momentum (ADAM), etc.

Second part: deployment.

According to the result of the deep neural network obtained by the training in the first part, the deployment process is performed according to the segmentation module 31, the conversion module 33 and the fusion module 35 in Fig. 3.

Step 1, firstly, segmenting input low-resolution bitmap data, wherein two methods can be used for segmentation herein, including a space domain method and a frequency domain method, and the space domain method can include: uniformly extracting edge parts by using an edge extraction strategy based on gradient, as shown in the following formula (3):

$$\varphi_i = \varphi_i^c + \varphi_i^t \qquad (3)$$

wherein $\varphi_i^c$ represents a content part of an image, and $\varphi_i^t$ represents a texture detail part of the image.

In view of the frequency domain method, a high-frequency component and a low-frequency component of the image can be extracted by using a method based on wavelet domain or MGA, as shown in the following formula (4):

$$\varphi_i = (1\text{-}T)(\varphi_i) + T(\varphi_i) \qquad (4)$$

wherein $T(\varphi_i)$ represents the high-frequency component of the image extracted in a transformation domain, and corresponds to the texture part in the image, $(1\text{-}T)(\varphi_i)$ represents the low-frequency component of the image, and corresponds to the content part of the image. For example, low-frequency information is separated from high-frequency information by using Meyer-based wavelet transformation. The Meyer-based wavelet transformation is described as:

$$WT(a,\tau) = \frac{1}{\sqrt{a}} \int_{-\infty}^{+\infty} f(t) * \Psi\left(\frac{t-\tau}{a}\right) dt \qquad (5)$$

wherein $WT(a,\tau)$ represents an output result of the Meyer-based wavelet transformation, $\Psi(t)$ represents a wavelet basis function, a Meyer wavelet basis based on frequency domain transformation can be selected herein, a represents a scale factor, $\tau$ represents a translation factor, and $f(t)$ represents an input signal. After each layer of wavelet transformation, three high-frequency components (corresponding to the texture parts in horizontal, vertical and diagonal directions respectively) and a low-frequency component (corresponding to the content of the image) can be obtained, corresponding to the formula (4), the high-frequency component is expressed as $T(\varphi_i)$, and the low-frequency component is expressed as $(1\text{-}T)(\varphi_i)$.

Step 2, after the separation processing, inputting $\varphi_i^t$ (or $T(\varphi_i)$) into the network trained in the first step to obtain a vector description corresponding to the texture part; and then, calculating pixel information at a new resolution in a vector amplification manner (that is, obtaining a reconstruction result $\varphi_i^{t'}$ of the texture part). For the other part, performing resolution zooming processing on $\varphi_i^c$ (or $(1\text{-}T)(\varphi_i)$) by using the isotropic method, such as Bicubic interpolation or Lanczos interpolation, so as to obtain a reconstruction result $\varphi_i^{c'}$ of the content part; and then, fusing the two results.

Step 3, using different manners according to different segmentation manners during a fusion process.

Optionally, one is a linear superposition manner, as shown in the following formula (6):

$$\varphi_i' = \varphi_i^{c'} + \alpha\varphi_i^{t'} \qquad (6)$$

wherein $\varphi_i'$ represents a fused image, $\varphi_i^{c'}$ represents the reconstruction result of the content part, and $\varphi_i^{t'}$ represents the reconstruction result of the texture part. $\alpha$ represents the weight of the texture part. The weight can be valued in two methods. One is linear superposition of hard threshold values, in which a reasonable $\alpha$ value is determined by means of multiple offline experiments. The other is to perform dynamic setting according to the number of vector components in the image, when the number of vector components (i.e.,, the vector descriptions corresponding to the texture part in step 2) is large, the $\alpha$ value can be increased. Exemplarily, setting or adaptive determination can be performed in areas according to the saliency of the texture herein.

Optionally, the other solution is to use a transformation domain manner, as shown in the following formula (7):

$$\varphi_i' = H^{-1}\left(H\left(\varphi_i^{c'}\right) + \alpha H\left(\varphi_i^{t'}\right)\right) \qquad (7)$$

wherein $\varphi_i'$ represents the fused image, H represents a transformation domain processing method, in which fusion (i.e., merging) is performed for the components of the transformation domain, and then inverse transformation $H^{-1}$ is performed on a merged result, for example, in view of the frequency domain component segmentation of the image based on wavelet transformation in step 1, a fusion result can be obtained herein by using wavelet inverse transformation $H^{-1}$. At this time, the output SR bitmap data not only has the delicate expression ability of color changes by the bitmap, but also has the approximate distortion-free expression of the texture part by the vector graph.

By means of the descriptions of the above embodiments, those skilled in the art can clearly understand that, the method according to the above embodiments can be implemented by means of software plus a necessary universal hardware platform, and of course can also be implemented by hardware, but the former is better embodiment in many cases. Based on this understanding, the technical solutions of the present invention essentially or the part contributing to the prior art can be embodied in the form of a software product, the computer software product is stored in a storage medium (such as a read-only memory (ROM)/random access memory (RAM), a magnetic disk and an optical disk), and include several instructions for instructing a computer device (can be a mobile phone, a computer, a server, or a network device and the like) to execute the method in various embodiments of the present invention.

The embodiments of the present invention further provide a computer-readable storage medium, wherein computer programs are stored in the computer-readable storage medium, and the computer programs are configured to execute the steps in any of the above method embodiments when running.

Optionally, in the present embodiment, the computer-readable storage medium can be configured to store computer programs for executing steps S1 to S3.

Step S1, segmenting a first image with a resolution being a first resolution according to an image change intensity, so as to obtain a gradient part and a texture part, wherein the image change intensity of the texture part is greater than that of the gradient part

Step S2, converting the gradient part into first pixel information with a resolution being a second resolution, and converting the texture part into second pixel information with a resolution being the second resolution according to second image format description information of the texture part, wherein the second image format description information of the texture part is determined according to a mapping relationship between a first image format and a second image format, and the image format of the first image is the first image format.

Step S3, fusing the first pixel information with the second pixel information to obtain a second image, wherein the resolution of the second image is the second resolution, and the second resolution is greater than the first resolution.

By means of the above steps, the image is segmented into the texture part and the gradient part, the texture part and the gradient part of the image are processed respectively, and then the processing results are fused. Therefore, the situation of a poor super resolution reconstruction effect in the related art can be avoided, and the super resolution reconstruction effect is improved.

Optionally, for specific examples in the present embodiment, reference can be made to the examples described in the foregoing embodiments and optional embodiments, and details are not described herein again in the present embodiment.

Optionally, in the present embodiment, the storage medium can include, but is not limited to, various media capable of storing computer programs, such as a USB flash disk, an ROM, an RAM, a mobile hard disk, a magnetic disk, or an optical disk.

The embodiments of the present invention further provide an electronic apparatus, including a memory and a processor, wherein computer programs are stored in the memory, and the processor is configured to run the computer programs to execute the steps in any of the above method embodiments.

Optionally, the electronic apparatus can further include a transmission device and an input and output device, wherein the transmission device is connected to the processor, and the input and output device is connected to the processor.

Optionally, in the present embodiment, the processor can be configured to execute steps S1 to S3 by means of the computer programs.

Step S1, segmenting a first image with a resolution being a first resolution according to an image change intensity, so as to obtain a gradient part and a texture part, wherein the image change intensity of the texture part is greater than that of the gradient part

Step S2, converting the gradient part into first pixel information with a resolution being a second resolution, and converting the texture part into second pixel information with a resolution being the second resolution according to second image format description information of the texture part, wherein the second image format description information of the texture part is determined according to a mapping relationship between a first image format and a second image format, and the image format of the first image is the first image format.

Step S3, fusing the first pixel information with the second pixel information to obtain a second image, wherein the resolution of the second image is the second resolution, and the second resolution is greater than the first resolution.

Through the above steps, the image is segmented into the texture part and the gradient part, the texture part and the gradient part of the image are processed respectively, and then the processing results are fused. Therefore, the situation of a poor super resolution reconstruction effect in the related art can be avoided, and the super resolution reconstruction effect is improved.

In some exemplary implementations, for specific examples in the present embodiment, reference can be made to the examples described in the foregoing embodiments and optional embodiments, and details are not described herein again in the present embodiment.

Obviously, those having ordinary skill in the art should understand that, the various modules or steps of the present invention can be implemented by a general-purpose computing apparatus, and the modules or steps can be centralized on a single computing apparatus, or distributed in a network composed of a plurality of computing apparatuses. Optionally, the modules or steps can be implemented by program codes executable by the computing apparatus, such that the modules or steps can be stored in a storage apparatus and executed by the computing apparatus, and in some cases, the shown or described steps are executed in a different order than here, or are separately fabricated into individual integrated circuit modules for implementation, or a plurality of modules or steps therein are fabricated into individual integrated circuit modules for implementation. As such, the present invention is not limited to any particular combination of hardware and software.

**Claims**

1. An image processing method, comprising:

   segmenting a first image with a resolution being a first resolution according to an image change intensity, so as to obtain a gradient part and a texture part, wherein the image change intensity of the texture part is greater than that of the gradient part;
   converting the gradient part into first pixel information with a resolution being a second resolution, and converting the texture part into second pixel information with a resolution being the second resolution according to second image format description information of the texture part, wherein the second image format description information of the texture part is determined according to a mapping relationship between a first image format and a second image format, and the image format of the first image is the first image format; and
   fusing the first pixel information with the second pixel information to obtain a second image, wherein the resolution of the second image is the second resolution, and the second resolution is greater than the first resolution.

2. The method according to claim 1, wherein the mapping relationship is a first model, the first model is obtained by training a deep neural network by using multiple groups of data, and each group of data among the multiple groups of data comprises: second sample images of a plurality of second image formats, and a first sample image of the first image format corresponding to the second sample image.

3. The method according to claim 2, further comprising:

   processing the second sample image to obtain an intermediate image, wherein the resolution of the intermediate image is the second resolution, and the image format of the intermediate image is the first image format; and

performing down-sampling processing on the intermediate image to obtain the first sample image, wherein the resolution of the first sample image is the first resolution, and the image format of the first sample image is the first image format.

4. The method according to claim 1, wherein the step of segmenting the first image with the resolution being the first resolution according to the image change intensity comprises:

segmenting the first image according to space domain information of the first image, wherein the space domain information indicates the image change intensity; or,

segmenting the first image according to frequency domain information of the first image, wherein the frequency domain information indicates the image change intensity.

5. The method according to claim 4, wherein the step of segmenting the first image according to the frequency domain information of the first image comprises:
respectively extracting a high-frequency component and a low-frequency component of the first image according to the frequency domain information of the first image, wherein the high-frequency component is used as the texture part, and the low-frequency component is used as the gradation part.

6. The method according to claim 1, wherein the step of fusing the first pixel information with the second pixel information comprises: performing linear superposition on the first pixel information and the second pixel information; or,
the step of fusing the first pixel information with the second pixel information comprises:

fusing the first pixel information with the second pixel information in a transformation domain, so as to obtain third pixel information; and

performing inverse transformation on the third pixel information, wherein the inverse transformation is an inverse process of the segmentation.

7. The method according to claim 6, wherein the step of performing linear superposition on the first pixel information and the second pixel information comprises:
performing linear superposition on the first pixel information and the second pixel information with a specified weight, wherein the specified weight is determined according to a first proportion, and the first proportion is a proportion of the texture part in the first image.

8. An image processing apparatus, comprising:

a segmentation module, configured to segment a first image with a resolution being a first resolution according to an image change intensity, so as to obtain a gradient part and a texture part, wherein the image change intensity of the texture part is greater than that of the gradient part;

a conversion module, configured to convert the gradient part into first pixel information with a resolution being a second resolution, and convert the texture part into second pixel information with a resolution being the second resolution according to second image format description information of the texture part, wherein the second image format description information of the texture part is determined according to a mapping relationship between a first image format and a second image format, and the image format of the first image is the first image format; and

a fusion module, configured to fuse the first pixel information with the second pixel information to obtain a second image, wherein the resolution of the second image is the second resolution, and the second resolution is greater than the first resolution.

9. A computer-readable storage medium, wherein computer programs are stored in the computer-readable storage medium, and the computer programs are configured to, when running, execute the method as claimed in any one of claims 1 to 7.

10. An electronic apparatus, comprising a memory and a processor, wherein computer programs are stored in the memory, and the processor is configured to run the computer programs to execute the method as claimed in any one of claims 1 to 7.

```
                                    ┌──────────────┐
                                    │ Transmission │
                    Input and output│   device     │
                      device  108   │     106      │
                                    └──────┬───────┘
                    ┌ ─ ─ ─ ─ ─ ─ ─ ─┐     │
                    │    ┌───┐        │┌────┴─────────┐
                    │    │   │        ││              │
                    │    └─┬─┘        ││              │
                    │      │          ││              │
                    │    ┌─┴─┐        ││              │
                    │    │ ○ │        ││              │
                    │    └─┬─┘        ││ Processor 102│
                    │      │          ││              │
                    │  ┌───┴───┐      ││              │
                    │  │       │      ││              │
                    │  └───────┘      ││              │
                    └ ─ ─ ─ ─ ─ ─ ─ ─┘│              │
                                      │              │
                                      └──────┬───────┘
                                             │
                                      ┌──────┴───────┐
                                      │   Memory     │
                                      │     104      │
                                      └──────────────┘
```

Fig. 1

```
┌─────────────────────────────────────────────────┐
│ Segmenting a first image with a resolution being │
│ a first resolution according to an image change  │
│ intensity, so as to obtain a gradient part and a │── S202
│ texture part, wherein the image change intensity │
│ of the texture part is greater than that of the  │
│                 gradient part                    │
└───────────────────────┬─────────────────────────┘
                        │
                        ▼
┌─────────────────────────────────────────────────┐
│ Converting the gradient part into first pixel    │
│ information with a resolution being a second     │
│ resolution, and converting the texture part into │
│ second pixel information with a resolution being │
│ the second resolution according to second image  │── S204
│ format description information of the texture     │
│ part, wherein the second image format            │
│ description information of the texture part is    │
│ determined according to a mapping relationship   │
│ between a first image format and a second image  │
│ format, and the image format of the first image  │
│ is the first image format                        │
└───────────────────────┬─────────────────────────┘
                        │
                        ▼
┌─────────────────────────────────────────────────┐
│ Fusing the first pixel information with the      │
│ second pixel information to obtain a second image,│── S206
│ wherein the resolution of the second image is the│
│ second resolution, and the second resolution is  │
│ greater than the first resolution                │
└─────────────────────────────────────────────────┘
```

Fig. 2

Segmentation module — 31

Conversion module — 33

Fusion module — 35

Fig. 3

Vector graph → High-resolution bitmap → Low-resolution bitmap

Fig. 4

Input bitmap data

Back propagation

No

A convergence condition is satisfied

Yes

Output a network model

Fig. 5

Fig. 6

## INTERNATIONAL SEARCH REPORT

| International application No. |
| --- |
| **PCT/CN2020/135536** |

**A. CLASSIFICATION OF SUBJECT MATTER**

G06T 3/40(2006.01)i

According to International Patent Classification (IPC) or to both national classification and IPC

**B. FIELDS SEARCHED**

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNPAT, WPI, EPODOC, CNKI, ISI, IEEE: 图像, 图片, 分辨率, 分割, 渐变, 纹理, 第二, 像素, 映射, 超分辨率, 重建, 重构, 锯齿, image, picture, resolution, segmentation, gradient, texture, second, pixel, mapping, super, reconstruction, aliasing

**C. DOCUMENTS CONSIDERED TO BE RELEVANT**

| Category* | Citation of document, with indication, where appropriate, of the relevant passages | Relevant to claim No. |
| --- | --- | --- |
| A | CN 108257108 A (ZHEJIANG NORMAL UNIVERSITY) 06 July 2018 (2018-07-06) abstract, description, paragraphs [0032]-[0068] | 1-10 |
| A | CN 110415169 A (SHENZHEN INSTITUTES OF ADVANCED TECHNOLOGY, CHINESE ACADEMY OF SCIENCES) 05 November 2019 (2019-11-05) entire document | 1-10 |
| A | CN 103489173 A (BAINIAN JINHAI SCIENCE & TECHNOLOGY CO., LTD.) 01 January 2014 (2014-01-01) entire document | 1-10 |
| A | CN 110310229 A (OPPO GUANGDONG MOBILE COMMUNICATIONS CO., LTD.) 08 October 2019 (2019-10-08) entire document | 1-10 |
| A | CN 102354397 A (DALIAN UNIVERSITY OF TECHNOLOGY) 15 February 2012 (2012-02-15) entire document | 1-10 |
| A | JP 2018137678 A (JAPAN BROADCASTING CORPORATION) 30 August 2018 (2018-08-30) entire document | 1-10 |

☐ Further documents are listed in the continuation of Box C.  ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **01 February 2021** | **25 February 2021** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2020/135536**

| Patent document cited in search report | | | Publication date (day/month/year) | Patent family member(s) | Publication date (day/month/year) |
|---|---|---|---|---|---|
| CN | 108257108 | A | 06 July 2018 | None | |
| CN | 110415169 | A | 05 November 2019 | None | |
| CN | 103489173 | A | 01 January 2014 | None | |
| CN | 110310229 | A | 08 October 2019 | None | |
| CN | 102354397 | A | 15 February 2012 | None | |
| JP | 2018137678 | A | 30 August 2018 | None | |

Form PCT/ISA/210 (patent family annex) (January 2015)

**REFERENCES CITED IN THE DESCRIPTION**

**Patent documents cited in the description**

- CN 201911289271